(19) Europäisches Patentamt / European Patent Office / Office européen des brevets

(11) **EP 1 972 775 B1**

(12) **FASCICULE DE BREVET EUROPEEN**

(45) Date de publication et mention
de la délivrance du brevet:
**12.05.2010 Bulletin 2010/19**

(51) Int Cl.:
*F02K 9/28* (2006.01)        *F02K 9/08* (2006.01)
*F02K 9/80* (2006.01)

(21) Numéro de dépôt: **08102627.0**

(22) Date de dépôt: **14.03.2008**

(54) **Procédé et dispositif de propulsion pyrotechnique avec modulation de poussée**

Verfahren und Vorrichtung für pyrotechnischen Antrieb mit Druckmodulation

Pyrotechnical propulsion method and device with thrust modulation

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **23.03.2007 FR 0753995**

(43) Date de publication de la demande:
**24.09.2008 Bulletin 2008/39**

(73) Titulaire: **SNPE Matériaux Energétiques
75004 Paris (FR)**

(72) Inventeur: **Delannoy, Guy
33160 Saint Médard en Jalles (FR)**

(74) Mandataire: **Le Roux, Martine et al
Cabinet Beau de Loménie
158, rue de l'Université
75340 Paris Cedex 07 (FR)**

(56) Documents cités:
**FR-A- 2 684 723      FR-A- 2 780 449
GB-A- 2 283 537      US-A1- 2006 201 134**

**Description**

La présente invention a pour objet un procédé de propulsion pyrotechnique avec modulation de poussée. Ledit procédé est basé sur la génération de gaz propulsifs à partir de moyens pyrotechniques.

La présente invention a également pour objet un dispositif de propulsion pyrotechnique avec modulation de poussée. Ledit dispositif est particulièrement adapté à la mise en oeuvre dudit procédé.

Le domaine technique de l'invention est plus particulièrement celui de la correction de trajectoire et/ou de la modulation de la poussée principale de missiles ou d'engins spatiaux.

Les systèmes de contrôle de trajectoire à propulsion sont utilisés pour manoeuvrer en vol des missiles.

Il s'agit notamment des systèmes de contrôles d'attitude qui assurent les fonctions de contrôle de trajectoire en lacets, en réalignement brusques et en roulis. Ces systèmes sont intégrés au corps de l'engin et délivrent des impulsions par l'intermédiaire de plusieurs tuyères multidirectionnelles activées à volonté selon les commandes du système de guidage. La durée et la sollicitation de fonctionnement du système de contrôle d'attitude dépendent de la mission de l'engin et de l'agilité de la cible.

Pour des missiles balistiques intercepteurs endo ou exo atmosphériques, la phase d'interception nécessite un guidage d'une grande précision balistique pendant une durée de plusieurs centaines de secondes (voir notamment Dauch et al., "Snpe Matériaux Energetiques technologies for missile defence propulsion systems", 3rd AAAF International Conference on Missile Defence, Challenge in Europe, June 7-9, 2006, Seville, Spa*in).* Le système de contrôle d'attitude doit pouvoir être activé à volonté pendant la phase d'interception, générer des impulsions suffisantes pour manoeuvrer un ensemble à haute vélocité, présenter un temps de réponse court aux instructions de guidage. Son encombrement doit être compatible avec les dimensions du véhicule intercepteur, sa masse minimisée.

Entre chaque sollicitation correspondant à des créneaux d'impulsion de corrections de trajectoire, le dispositif de génération de gaz doit pouvoir être mis en veille. Durant cette phase, la consommation en carburant du dispositif doit être la plus faible possible.

Il existe des dispositifs basés sur la combustion d'ergols liquides, permettant une grande dans la gestion des réserves des ergols embarqués en fonction de la sollicitation du dispositif. Cependant, ces systèmes ont l'inconvénient de présenter des temps de réponse élevés vis-à-vis des sollicitations du système du guidage et de délivrer des impulsions faibles inhérentes à la propulsion liquide.

D'autres dispositifs utilisent un chargement de propergol solide débitant par l'intermédiaire de tuyères à section variable pilotée. La pression dans la chambre de combustion et le débit de gaz propulsif sont proportionnels aux sections des différentes tuyères. Les impulsions délivrées sont alors intéressantes mais la difficulté provient, d'une part, de la gestion du carburant embarqué qui continue à être consommé pendant les phases de veille en énergie perdue (par exemple en évacuant les gaz produits par la combustion du propergol par des orifices opposés de manière à annuler les vecteurs poussées), et, d'autre part, de la maîtrise du comportement (risques d'extinction-réallumage intempestif, d'oscillation de fonctionnement) du propergol dans les phases transitoires d'activation rapide ou de relaxation du dispositif. De plus, le temps de réponse du système pour passer d'une phase de combustion à faible régime de veille à une phase active pénalise les performances du dispositif. Par ailleurs, les moyens de vannage des tuyères doivent pouvoir supporter les gaz et particules chaudes issues de la combustion pendant toute la durée de fonctionnement du dispositif (phase active et phase de veille).

Enfin, la demande de brevet US 2006/0201134 dévoile un dispositif de correction de trajectoire utilisant des moteurs à détonation pulsée. Cette technologie séduisante en raison du niveau d'impulsion délivré et du temps de réponse reste encore en phase de maturation technologique. De plus, le dispositif décrit nécessite un moteur par axe de poussée, ce qui alourdit le système et augmente son coût.

Ce document constitue l'art antérieur le plus proche et contient les caractéristiques du préambule des revendications 1 et 6.

L'homme du métier est ainsi à la d'un procédé de délivrance d'une poussée, à la demande, avec un temps de réponse court, basé sur la combustion de propergols solides. Les dispositifs à propergol solide sont en effet réputés pour leur fiabilité et leur facilité de maintenance. Ils permettent en effet d'embarquer l'énergie juste nécessaire à la mission. Ils permettent ainsi de minimiser les volumes et masses embarqués.

On a compris que problème technique évoqué ci-dessus est particulièrement crucial dans le domaine de la conception et du pilotage des missiles.

Dans le contexte rappelé ci-dessus, l'invention propose :

- d'une part, un procédé capable de à la demande, des impulsions de poussée, d'intensité, de direction et de durée variables, utilisant comme source d'énergie du propergol solide, embarqué en quantité nécessaire et suffisante, et ne consommant cette énergie qu'en cas de besoin ; et
- d'autre part, un dispositif de conception simple, qui convient à la mise en oeuvre dudit procédé.

Selon son premier objet, l'invention concerne donc un procédé original de propulsion pyrotechnique avec modulation de poussée. De façon caractéristique, ledit procédé comprend :

- le maintien sous pression, dans le temps, d'au moins un réservoir avec les gaz de combustion de chargements pyrotechniques solides, séparés ; au moins certains desdits chargements étant allumés, de façon différée, indépendamment les uns des autres, à la demande ; et
- la délivrance à volonté, en continu ou par créneaux, à partir dudit au moins un réservoir de gaz sous pression ; ladite délivrance étant mise en oeuvre avec contrôle de la pression au sein dudit réservoir.

De façon caractéristique, dans le cadre dudit procédé :

- une réserve de gaz sous pression est constituée puis entretenue, par combustion, séparée, différée, de chargements pyrotechniques indépendants. A cette fin, la quantité d'énergie nécessaire est stockée, de manière discrète, en plusieurs blocs de propergols, qui peuvent être initiés pas tous en même temps, indépendamment les uns des autres, , à la demande ;
- les gaz sous pression de ladite réserve sont éjectés, à la demande, de manière contrôlée, sous la forme d'impulsions, de durée ou(et) de niveau modulé(s)...

La pression est maintenue dans le réservoir par la gestion des quantités de gaz générées (par la combustion des chargements pyrotechniques) et de gaz éjectées.

Les gaz générés par les chargements pyrotechniques ne sont généralement pas délivrés dans l'instant de leur production.

Dans le cadre d'une variante de en oeuvre particulièrement avantageuse, le procédé de l'invention comprend :

- la pressurisation d'au moins un réservoir avec les gaz de combustion d'au moins un chargement pyrotechnique solide, dit(s) chargement(s) initial(initiaux) ;
- la délivrance, à volonté, en continu ou par créneaux, à partir dudit au moins un réservoir, desdits gaz sous pression ; ladite délivrance s'effectuant avec contrôle de la pression au sein dudit au moins un réservoir ; et
- au moins une fois, la mise en oeuvre des deux nouvelles étapes ci-après de :

  + re-pressurisation dudit au moins un réservoir avec les gaz de combustion d'au moins un autre chargement pyrotechnique solide dit(s) chargement(s) de maintien ; et
  + délivrance, à volonté, en continu ou par créneaux, à partir dudit au moins un réservoir, desdits gaz ; ladite délivrance s'effectuant avec contrôle de la pression au sein dudit au moins un réservoir ; ladite re-pressurisation étant déclenchée lorsque ladite pression, au sein dudit au moins un réservoir, atteint un seuil prédéterminé, fixe ou variable.

Le procédé de l'invention permet, de manière générale, de délivrer à volonté (en continu ou par créneaux) des gaz propulsifs stockés dans un réservoir. La délivrance a généralement lieu de façon classique par l'intermédiaire d'au moins un orifice dudit réservoir, muni d'une vanne commandée par le système utilisateur.

Les gaz propulsifs sont tout d'abord générés par la combustion dudit au moins un chargement pyrotechnique de pressurisation initiale puis dudit au moins un chargement pyrotechnique de maintien (le contrôle de la pression dans ledit au moins un réservoir entraîne la combustion dudit au moins un chargement pyrotechnique de maintien, lorsque ladite pression atteint un seuil prédéterminé. Ce seuil peut être fixe ou varier au de l'opération). Lesdits gaz propulsifs sont stockés dans ledit au moins un réservoir dans l'attente de leur délivrance lorsque le système utilisateur le commande. Comme indiqué ci-dessus, lesdits gaz ne sont généralement pas délivrés dans l'instant de leur production.

La pressurisation initiale du réservoir par ledit au moins un chargement pyrotechnique de pressurisation initiale est généralement commandée dès l'apparition du besoin opérationnel délivrance de gaz propulsif. Toutefois, il n'est pas exclu qu'elle ait été prévue antérieurement et qu'un ré-ajustement puisse alors être nécessaire. Dans un tel contexte, on peut ainsi faire successivement brûler plusieurs chargements pyrotechniques initiaux...

La délivrance des impulsions par la libération des gaz propulsifs contenus dans ledit au moins un réservoir est ensuite réalisée en fonction du besoin ; la pressurisation dudit au moins un réservoir étant maintenue au dessus d'un seuil prédéterminé par la combustion d'au moins un chargement pyrotechnique de maintien.

Il faut comprendre que la fréquence d'activation des vannes des orifices (plusieurs orifices sont généralement présents) du au moins un réservoir peut être très rapide (environ quelques millisecondes à quelques secondes) et que la recharge dudit réservoir par ledit au moins un chargement pyrotechnique de maintien n'est généralement nécessaire qu'après plusieurs activations des vannes. De façon générale, la quantité de gaz délivrée à chaque impulsion est très inférieure à celle générée par la combustion d'un chargement pyrotechnique. La durée opérationnelle peut être très supérieure à celle de la durée des créneaux d'activation des vannes et à celle de la combustion dudit au moins un chargement pyrotechnique de maintien.

La poussée d'un système est la résultante des forces de pression sur toute sa surface. Pour un réservoir fermé, toutes ces forces s'équilibrent et la résultante est nulle. Dans le cadre du procédé de l'invention, dès le début de la délivrance (dès l'ouverture d'au moins une vanne), l'équilibre est rompu et une force propulsive apparaît. Contrairement aux procédés de l'art antérieur où la modulation de poussée résulte d'un changement de régime de combustion, selon l'invention, le délai d'apparition d'une force n'est que le délai de déclenchement de la délivrance (c'est-à-dire le délai d'ouverture d'au moins une vanne) ; il n'y a pas lieu d'ajouter audit délai un délai de mise en régime de combustion.

Les chargements pyrotechniques de maintien sont prévus en nombre suffisant pour pouvoir assurer la pressurisation dans ledit au moins un réservoir au dessus de la pression seuil prédéterminée pendant toute la durée de la mission.

Le seuil de pression pour lequel la recharge du réservoir est commandée peut varier au cours de la mission en fonction des besoins d'impulsion.

L'allumage indépendant des n chargements pyrotechniques (initial(iaux) + de maintien) est avantageusement réalisé par n allumeurs étectro-pyrotechniques indépendants commandés par une centrale pilotée par le système utilisateur.

La combustion des n chargements pyrotechniques a lieu dans n chambres de combustion. La pression de combustion de chaque chargement pyrotechnique est déterminée par l'architecture du chargement et de la chambre de combustion. Selon le fonctionnement souhaité, la pression de combustion du chargement pyrotechnique peut être supérieure (en utilisant un orifice adapté) ou égale (ou très proche) à celle du réservoir. Dans ce dernier cas, après son allumage, le chargement de propergol brûle alors à la même pression que celle du réservoir, cette dernière augmentant au fur et à mesure de la combustion du chargement pyrotechnique. La chambre de combustion du au moins un chargement pyrotechnique de maintien est avantageusement operculée au moyen d'un disque frangible. Cet operculage isole et protège le chargement pyrotechnique en condition de stockage et évite, en condition opérationnelle, l'allumage intempestif d'un chargement de maintien (en condition de stockage) par remontée dans la chambre de combustion de gaz chaud de combustion émis par un chargement pyrotechnique en combustion.

Dans le cadre de la mise en oeuvre du procédé de l'invention, les gaz de combustion sont avantageusement filtrés avant d'être délivrés sous pression. On vise ainsi à les débarrasser des plus gros résidus qu'ils sont susceptibles de renfermer, tels les débris émanant des chambres de combustion (morceaux d'opercules frangibles ou de protections thermiques (voir plus loin)...).

En référence aux chargements pyrotechniques utiles à la mise en oeuvre du procédé de l'invention, on peut préciser, de façon nullement limitative, ce qui suit.

Lesdits chargements pyrotechniques, de par leur nature et leur géométrie, sont en fait des chargements de l'art antérieur. Ils peuvent chacun consister en une ou plusieurs charges pyrotechniques. De telles charges pyrotechniques sont constituées d'éléments de propergol ; lesdits éléments étant de type blocs monolithiques ou pastilles. Lesdits éléments sont disposés en vrac ou arrangés dans des chambres de combustion. Ils sont avantageusement arrangés pour limiter l'encombrement.

Lesdits chargements pyrotechniques présentent avantageusement une composition de propergol solide à forte impulsion spécifique. De façon très avantageuse, lesdits chargements pyrotechniques sont constitués d'un composition de propergol à forte impulsion spécifique dite propre, c'est-à-dire ne produisant pas ou peu de particules. Cette caractéristique répond au souci de limiter les agressions mécaniques des vannes des orifices du réservoir et la pollution par le jet des systèmes optroniques de guidage du système utilisateur.

La génération de gaz par le procédé de l'invention présente l'avantage de ne pas dépendre des caractéristiques balistiques du propergol contrairement aux procédés utilisant une combustion en continu du propergol, lequel doit alors présenter des vitesses adaptées aux différents régimes de fonctionnement et supporter les transitions rapides de régime de fonctionnement. Il est seulement demandé aux chargements de propergol utilisés lors de la mise en oeuvre du procédé de la présente invention de brûler à une pression au moins égale à celle du réservoir, sinon supérieure si les chambres de combustion des chargements comporte des orifices adaptés. Dès lors, la gamme de propergols susceptibles de répondre à l'application s'étend sans restriction à toutes les familles de propergols à haute impulsion spécifique, comme les compositions commercialisées sous les marques Butargol™, Nitrargol™, Azorgol® et Oxargol® (on peut se référer au document *Dauch et al*. identifié en première page de ce texte).

Au vu des propos ci-dessus, on comprend que le procédé de l'invention convient tout particulièrement à la génération de gaz propulsifs pour la correction de trajectoire et/ou la modulation de la poussée principale d'un missile, notamment d'un missile balistique intercepteur.

Selon son deuxième objet, l'invention concerne un dispositif de propulsion pyrotechnique convenant à la mise en oeuvre du procédé décrit ci-dessus. Ledit dispositif peut tout à fait s'analyser comme un dispositif de génération de gaz propulsifs, utilisables à la demande, éventuellement de façon multidirectionnelle. Ledit dispositif, de façon caractéristique, comprend :

- au moins une chambre de combustion convenant à la combustion en son sein d'un chargement pyrotechnique dit chargement initial, équipée d'au moins un orifice pour débiter les gaz de combustion générés dans au moins un réservoir ;
- au moins une autre chambre de combustion convenant à la combustion en son sein d'un autre chargement pyrotechnique dit chargement de maintien, équipé d'au moins un orifice pour débiter les gaz de combustion générés dans ledit au moins un réservoir ;
- ledit au moins un réservoir convenant au stockage sous pression desdits gaz de combustion, équipé de moyens de délivrance de gaz, actionnables à volonté ;
- des moyens d'allumage, initiables à volonté par des moyens de commande, pour l'allumage indépendant du(des) chargement(s) initial(initiaux) puis, ensuite, du(des) chargement(s) de maintien ; et
- des moyens de contrôle de la pression dans ledit au moins un réservoir, reliés auxdits moyens de commande desdits moyens d'allumage indépendants des chargements pyrotechniques.

Ledit au moins un réservoir constitue un réservoir de stockage des gaz de combustion produits successivement par ledit au moins un chargement initial et ledit au moins un chargement de maintien. Lesdits gaz de combustion sont délivrés à l'extérieur dudit au moins un réservoir par l'intermédiaire de moyens de délivrance, actionnables à volonté. De tels moyens de délivrance comprennent généralement un orifice équipé d'une vanne.

Ledit au moins un réservoir est couplé à au moins deux chambres de combustion :

- au moins une, qui est utilisée pour sa pressurisation initiale ;
- au moins une autre, qui est utilisée, plus tard, pour le maintien de la pression en son sein.

Lesdites au moins deux chambres de combustion sont équipées de ou reliées à des moyens d'allumage, indépendants, de leur chargement pyrotechnique respectif. Ainsi, les chargements pyrotechniques peuvent être allumés indépendamment les uns des autres. On allume généralement le chargement pyrotechnique initial ou les chargements pyrotechniques initiaux (ensemble) puis, successivement, un à un, les chargements pyrotechniques de maintien. Toutefois, il ne saurait être exclu d'allumer successivement plusieurs chargements initiaux pour la pressurisation initiale et/ou, en même temps, plusieurs chargements de maintien. Les moyens d'allumage sont déclenchables par des moyens de commande reliés aux moyens de contrôle de la pression au sein dudit réservoir. Grâce à l'interaction desdits moyens, on peut gérer le maintien de la pression au sein dudit réservoir, malgré l'activation des moyens de délivrance de gaz.

Selon une variante de réalisation préférée, le dispositif de l'invention comprend un réservoir associé à m chambres de combustion convenant à la combustion d'un chargement pyrotechnique initial et à n chambres de combustion convenant à la combustion d'un chargement pyrotechnique de maintien, avec :

m = 1, 2 ou plus, avantageusement un faible nombre entier pair et
n >> m.

De façon très avantageuse, au moins un chargement pyrotechnique de pressurisation initiale est disposé dans une chambre de combustion à l'intérieur du réservoir.

Le au moins un autre chargement pyrotechnique, dit chargement pyrotechnique de maintien, destinés à maintenir en pression le réservoir au dessus d'un certain seuil au fur et à mesure de la délivrance des gaz de combustion est lui très avantageusement disposé dans au moins une chambre de combustion à l'extérieur du réservoir. Pour cela, la paroi du réservoir est avantageusement munie d'au moins une alvéole servant de support de fixation à au moins une chambre de combustion contenant ledit au moins un chargement pyrotechnique de maintien.

La disposition des au moins deux chambres de combustion recevant le au moins un chargement pyrotechnique de pressurisation et le au moins un chargement pyrotechnique de maintien est généralement optimisée de façon à maintenir la localisation du barycentre massique du dispositif stable lors du fonctionnement dudit dispositif.

Ledit au moins un réservoir du dispositif de l'invention peut présenter une structure déployable ou rigide. Il peut ainsi être constitué d'une baudruche ou d'un réservoir articulé apte à se déployer lors du fonctionnement du dispositif (suite à la combustion dudit au moins un chargement pyrotechnique de pressurisation initiale). Ceci a pour effet de limiter l'encombrement et la masse du dispositif au repos. Il peut aussi, selon une autre variante, être constitué d'une structure rigide, par exemple métallique ou en carbone. De telles structures, déployables ou rigides, sont généralement aptes à supporter des pressions de quelques bars à quelques centaines de bars...

Dans des systèmes aéroportés ou embarqués, ledit au moins un réservoir peut être intégré à la structure de l'engin, par exemple le fuselage ou les ailes.

Ledit au moins un réservoir est avantageusement tapissé, sur la(les) face(s) intérieure ou(et) extérieure de sa paroi ou de ses parois, d'un isolant thermique limitant la déperdition thermique des gaz de combustion stockés, et donc limitant la chute de pression dans ledit réservoir, et ainsi la consommation de propergol pour regonfler ledit réservoir.

Il faut aussi noter que ledit au moins un chargement pyrotechnique de maintien constitue, lorsqu'il est disposé en enveloppe du réservoir (voir plus loin), aussi une barrière thermique favorable à l'optimisation du fonctionnement du système.

Les chambres de combustion de chaque chargement pyrotechnique sont généralement constituées d'un ensemble mécanique contenant un module d'initiation pyrotechnique et un orifice de délivrance des gaz de combustion dans ledit au moins un réservoir. Elles contiennent le chargement pyrotechnique, dont les différents éléments constitutifs sont en vrac ou arrangés de façon à limiter l'encombrement et éventuellement une pastille pyrotechnique relais d'allumage. Ledit chargement pyrotechnique est en fait généralement monobloc mais peut aussi être composé d'un ou plusieurs blocs, ou même d'un ensemble de pastilles.

La nature et la géométrie des différents chargements peuvent être différentes, notamment entre ledit au moins un chargement pyrotechnique de pressurisation initiale et ledit au moins un chargement de maintien.

Avantageusement, l'orifice de chaque chambre de combustion et plus particulièrement celui des chambres de combustion convenant à la combustion des chargements pyrotechniques de maintien est initialement obturé au moyen d'un opercule d'épaisseur calibrée. Le choix du diamètre de l'orifice associé à celui de l'épaisseur de l'opercule permet de fixer la pression d'ouverture de la chambre de combustion lors du fonctionnement du chargement pyrotechnique.

L'orifice de chaque chambre de combustion est avantageusement déterminé de façon à ce que la pression de combustion du chargement entraîne une combustion complète du chargement (pas d'extinction avant la fin de la combustion de la totalité du chargement). Lorsque les caractéristiques balistiques de la composition de propergol retenue le permettent, la pression de fonctionnement des chambres de combustion est avantageusement imposée par celle du réservoir après la rupture de l'opercule de la chambre de combustion.

Afin de préserver les moyens de délivrance de gaz propulsif actionnables, un filtre est avantageusement disposé à l'intérieur dudit au moins un réservoir de façon à retenir les plus gros débris émanant des chambres de combustion, tels que des morceaux d'opercules frangibles ou de protections thermiques. Ce filtre est généralement une grille métallique disposée en amont desdits moyens de délivrance des gaz de combustion.

Lesdits moyens de délivrance des gaz comprennent avantageusement au moins une tuyère. Ils comprennent ainsi avantageusement au moins un orifice du réservoir associé à une vanne et à au moins un divergent.

Selon une variante de réalisation particulièrement avantageuse, le dispositif de l'invention comprend un réservoir de structure rigide, dont les parois présentent des alvéoles :

- au moins une desdites alvéoles, convenant à l'agencement interne d'une chambre de combustion, pour la combustion d'un chargement pyrotechnique initial,
- au moins une desdites alvéoles, convenant à l'agencement externe d'une chambre de combustion, pour la combustion d'un chargement pyrotechnique de maintien.

On a vu ci-dessus que de telles alvéoles servent de support de fixation aux chambres de combustion.

Dans le cadre de cette variante de réalisation avantageuse, elles sont prévues à l'intérieur et à l'extérieur, sur les deux faces des parois du réservoir.

Dans le cadre de cette variante de réalisation avantageuse, on peut notamment avoir un réservoir délimité par une paroi cylindrique et deux parois d'extrémité, avantageusement bombées, prolongeant ladite paroi cylindrique ; lesdites parois d'extrémité présentant des alvéoles, disposées par paire, en vis-à-vis, convenant à l'agencement interne de chambres à combustion, et ladite paroi latérale présentant n alvéoles, convenant à l'agencement externe de n chambres de combustion ; lesdites n alvéoles étant réparties en m couronnes de n/m alvéoles.

Ainsi prévoit-on avantageusement l'agencement interne de chambres de combustion pour la pressurisation initiale (l'agencement interne de, notamment deux chambres de combustion, en vis-à-vis l'une de l'autre, sur la face intérieure de parois d'extrémité) et l'agencement externe de n chambres de combustion pour le maintien de la pressurisation.

L'invention, sous ses deux aspects de procédé et dispositif, est maintenant décrite, de façon nullement limitative, en référence aux figures annexées. Un exemple de mise en oeuvre du procédé de l'invention est plus particulièrement décrit en référence auxdites figures.

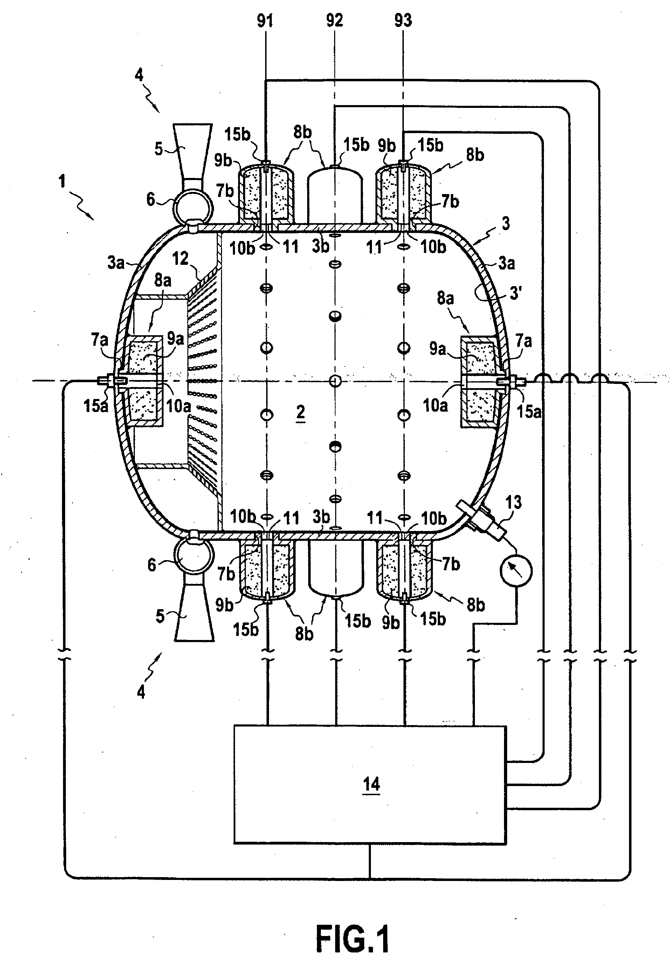

La figure 1 est une vue en coupe d'un dispositif de propulsion pyrotechnique selon l'invention. On a représenté, de façon schématique, sur ladite figure 1, les éléments périphériques dudit dispositif.

Les 2A, 2B et 2C schématisent la séquence d'allumage des chargements de maintien, disposés en trois couronnes sur la face extérieure de la paroi latérale du réservoir (voir la figure 1).

La figure 3 montre les caractéristiques de fonctionnement, dans les premiers instants d'activation, d'un de l'invention que représenté sur la figure 1). Ladite figure 3 illustre une mise en oeuvre du procédé de l'invention.

La figure 4 montre un détail des caractéristiques de fonctionnement de la figure 3.

Sur la figure 1, on a donc représenté un dispositif de l'invention, référencé **1.**

Ledit dispositif **1** comprend le réservoir **2**, de géométrie de révolution, délimité par la paroi **3**. Il est précisément délimité par la paroi cylindrique **3b** et les deux parois d'extrémité **3a,** bombées. Ledit réservoir 2 est un réservoir préformé, par exemple en un matériau métallique ou en carbone. Sa structure convient pour le stockage de gaz sous pression (voir ci-après). Sa paroi **3** (= **3a** + **3b)** est tapissée, sur sa face interne, d'un isolant thermique **3'.**

Ledit réservoir **2** est muni de moyens de délivrance de gaz, actionnables à volonté. Il s'agit de tuyères multidirectionnelles **4,** comportant chacune divergents **5** et vanne **6,** aptes à être actionnées par le système utilisateur (non représenté). Lesdites tuyères **4** conviennent pour délivrer le gaz, en continu ou par créneaux (par impulsion), renfermé, sous pression, dans le réservoir **2.**

On s'intéresse maintenant plus particulièrement aux moyens, associés audit réservoir **2,** aptes à le pressuriser. Il s'agit des chambres de combustion **8a** et **8b** renfermant les chargements pyrotechniques solides **9a** et **9b.** Lesdites chambres de combustion **8a** et **8b** sont encastrées dans des alvéoles **7a** et **7b,** respectivement aménagées sur les faces intérieure et extérieure de la paroi **3** du réservoir **2.** Sur le dispositif représenté, deux chambres de combustion **8a** sont agencées à l'intérieur dudit réservoir **2,** dans deux alvéoles **7a** prévues, en vis-à-vis, sur les faces intérieures des parois d'extrémité **3a,** bombées, tandis que n chambres de combustion **8b** sont agencées à l'extérieur (en périphérie) dudit réservoir **2,** dans n alvéoles **7b** prévues sur la face extérieure de la paroi cylindrique **3b.** Lesdites n chambres de combustion **9b** sont agencées selon trois couronnes **91, 92** et **93.**

Des orifices **10a** et **10b** permettent l'accès au réservoir **2** des gaz générés par la combustion des chargements pyrotechniques **9a** et **9b.** Les orifices **10b** sont initialement operculés par un disque métallique frangible **11.** Les orifices **10a,** sur la variante représentée, ne sont pas operculés. On voit plus loin que les chargements **9a** sont les chargements initiaux et les chargements **9b** les chargements de maintien.

La grille métallique **12** (filtre) sert à piéger, à l'intérieur du réservoir **2,** les plus gros résidus solides de combustion. Ladite grille **12** est évidemment disposée en amont des tuyères **4.**

Un moyen de mesure (de contrôle) de la pression **13** est monté sur le réservoir **2.** Il est connecté à la centrale de commande **14** de l'initiation unitaire des chargements pyrotechniques **9a** et **9b.** Des moyens d'allumage **15a** et **15b** équipent chaque chambre de combustion **8a** et **8b.**

En référence à la figure 1, on décrit ci-après une mise en oeuvre du procédé de l'invention.

Au sein d'un dispositif **1** de l'invention, du type donc de celui schématisé sur la figure 1, on a mis en oeuvre le procédé de l'invention pour le contrôle d'attitude d'un missile intercepteur en tangage, lacet et roulis, de manière décorrélée, pour lequel on doit pouvoir délivrer quelques milliers d'impulsions de quelques Newton.secondes (N.s.) pendant une durée pouvant atteindre plusieurs centaines de secondes.

Le réservoir **2** est constitué d'une cavité centrale dont le volume de révolution est compris entre 10 et 50 dm$^3$. Ledit réservoir 2 comprend, d'une part, quelques dizaines d'alvéoles **7b** périphériques (42 sur l'exemple de la figure 1), disposées en plusieurs couronnes (3 couronnes de 14 alvéoles sur l'exemple de la figure 1), destinées à recevoir les chambres de combustion **8b** des chargements pyrotechniques 9b de maintien, et d'autre part, 2 alvéoles **7a** internes destinées à recevoir les chambres de combustion **8a** des chargements pyrotechniques **9a** de pressurisation initiale. Les chambres de combustion **8a, 8b** des chargements pyrotechniques **9a, 9b** sont connectées (par l'intermédiaire d'une gorge filetée) aux alvéoles **7a, 7b.**

Le réservoir **1** est réalisé en un métal léger hautement résistant de type titane. L'ensemble des parois intérieures **3** (**3a** + **3b**) du réservoir **1** est tapissé de protections thermiques **3'** dimensionnées pour garantir qu'avec une température des gaz dans le réservoir égale à la température de combustion (2600 K), la température d'un chargement de propergol reste largement inférieure à sa température d'initiation en combustion au bout du temps requis de fonctionnement du système (plusieurs centaines de secondes). La protection thermique **3'** est réalisée en un matériau classiquement utilisé dans la propulsion à propergol solide. Elle a un triple but :

 o protéger la structure du réservoir,
 o minimiser les pertes thermiques du système,
 o garantir le non allumage des charges par conduction thermique.

L'architecture du système et l'épaisseur de protection thermique (moins de 10 mm) permettent d'assurer ces trois fonctions.

L'énergie de propulsion est fournie par quelques kilogrammes d'un propergol. L'impulsion spécifique du propergol considéré est typiquement 245 secondes. Compte tenu qu'en fin de fonctionnement, le réservoir **2** reste sous pression, cette masse de propergol confère au système une capacité d'environ 2 500 à 7 500 N.s. Sur l'exemple de la figure 1, cette masse de propergol est répartie en 44 chargements, deux **9a** à l'intérieur du réservoir **1** qui n'ont pas besoin d'être isolés thermiquement car ils assurent la pressurisation initiale, les 42 autres **9b** en périphérie, en trois couronnes de 14 chargements **91, 92, 93** à l'extérieur du réservoir **2** assurant le maintien en pression. Cette disposition externe garantit qu'il n'y aura pas d'allumage par conduction, même au bout de plusieurs centaines de secondes de pressurisation du réservoir **2.** Le pressurisation initiale du dispositif **1** s'effectue en initiant simultanément en combustion les deux chargements internes **9a** dits de pressurisation. La masse M$_i$ de ces deux chargements **9a** de pressurisation est ajustée de manière à obtenir au sein du réservoir **2** en l'absence de débit vers l'extérieur (toutes vannes fermées) la pression maximale supportable par celui-ci $P_{max}$, environ 20 MPa, suivant la formule :

$$M_i = \frac{P_{max} \times Volume\ Réservoir}{R \times T_C}$$

avec $T_C$ température de combustion du propergol et R constante réduite des gaz de combustion. Lorsque, suite aux ouvertures des vannes **6** délivrant les gaz propulsifs par l'intermédiaire des tuyères **4** en fonction du besoin opérationnel, la pression dans le réservoir **2** devient inférieure à une proportion définie $\alpha$ : 50 % $\leq \alpha \leq$ 85% de la pression maximale initiale $P_{max}$, on procède à l'initiation d'un des 44 chargements externes **9b** de maintien. La masse $M_C$ des chargements externes **9b** est telle qu'en l'absence de délivrance par les tuyères **4,** la combustion de l'un d'eux permette de « regonfler » le réservoir **2** à la pression maximale initiale :

$$M_c = \frac{(1 - 0,85) \times P_{max} \times Volume\ Réservoir}{R \times T_C}$$

La combustion simultanée des deux chargements internes **9a** n'induit pas de déplacement latéral du centre de gravité du dispositif et induit un déplacement longitudinal inférieur à 5mm. L'ordre d'initiation des chargements de maintien en périphérie **9b** est choisi de façon à minimiser les deux déplacements latéral et longitudinal du centre de gravité qui restent inférieurs à respectivement quelques dixièmes de millimètres et quelques millimètres.

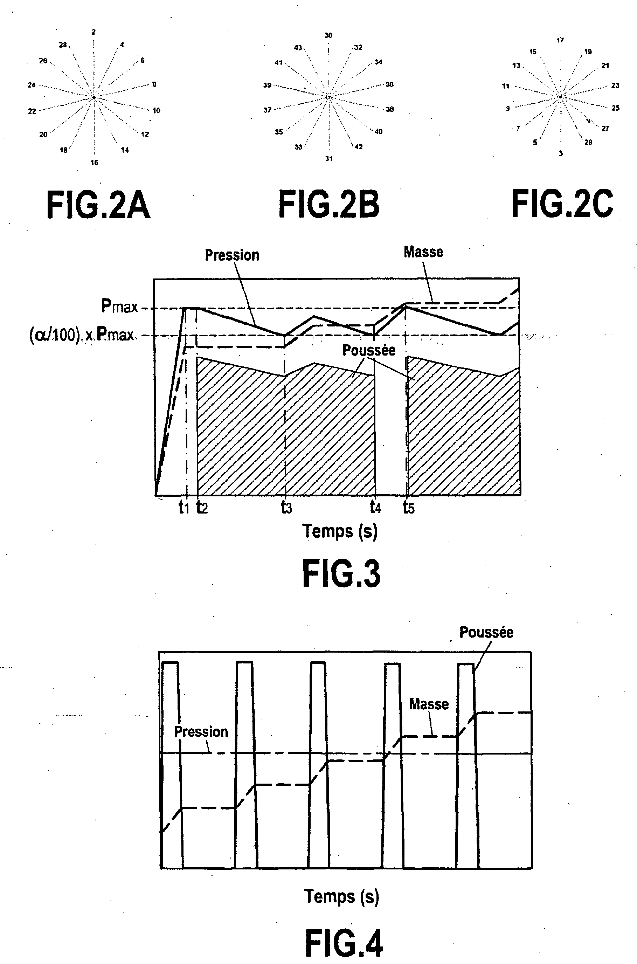

La séquence d'allumage correspondante à la configuration de l'exemple 1 est explicitée sur les figures 2A, 2B et 2C. Les deux chargements intérieurs **9a** de pressurisation initiale sont initiés en premier. Les 42 chargements extérieurs **9b**, organisés en trois couronnes de quatorze, sont ensuite initiés en alternant la couronne **91** et la couronne **93.** On termine par la couronne **92** en brûlant un chargement puis celui diamétralement opposé.

Il est à noter que le choix architectural consistant à positionner les chargements de propergol de maintien **9b** en périphérie résulte d'une volonté de minimiser les transferts thermiques du réservoir **2** vers les chargements de maintien **9b,** évitant ainsi les risques d'inflammation intempestive. Le second rôle des protections thermiques **3'** est de minimiser les pertes thermiques qui contribuent à une diminution des performances du système (en terme d'impulsion délivrée).

La grille **12** en matériau réfractaire divise le réservoir **2** en deux parties, séparant les tuyères de délivrance des gaz de combustion, des chambres de combustion. Cette grille **12** a un double rôle : d'une part, empêcher les opercules **11** et autres résidus solides de chacun des chargements de maintien périphériques 9b (ainsi que les résidus solides de chacun des chargements **9a** de pressurisation initiaux) de passer par les vannes **6** et les tuyères **4,** ce qui pourrait les endommager, et d'autre part, réduire la turbulence à l'intérieur du réservoir **2,** facteur de transfert thermique vers les parois. Pour assurer ces fonctions, les mailles de cette grille **12** ont une caractéristique quelques millimètres, et la section efficace de passage est supérieure à 0,5 fois la surface de la grille.

Pour une section donnée de col de tuyère, la poussée est au premier ordre proportionnelle à la pression dans le réservoir. En limitant les variations de pression dans une plage [$\alpha$, 100%], on obtient pour une ouverture donnée de vanne, une poussée dans une plage identique, dans la mesure où le coefficient de poussée $C_F$ ne dépend pas de la pression du réservoir. Avant d'être un débit de quantité de mouvement, la poussée est d'abord l'intégrale des forces de pression qui s'exerce sur l'ensemble des parois d'un système. Dans une cavité fermée, cette intégrale est nulle : l'ensemble des forces de pression s'équilibrent. Dès l'ouverture de la vanne, cette équilibre est rompu et dès les tous premiers instants où une vanne s'ouvre d'une section $S_0$ , la poussée résultante est égale au produit de la pression dans le plenum par la section $S_0$ . Dans ce dispositif, le temps de réponse en poussée est donc le temps d'ouverture de la vanne.

Pour l'exemple présenté, le nombre de tuyères **4** de délivrance des gaz est de 8 organisés de la façon suivante : deux fois trois tuyères pour le tangage et le lacet, deux fois une tuyère pour le roulis. Chaque tuyère **4** est munie d'une vanne **6** commandée par le système de pilotage et d'un divergent **5** optimisant la poussée des gaz.

Le choix de composition de propergol sans particules est guidé par le souci d'assurer un bon fonctionnement des vannes **6** (éviter le grippage, le bouchage) et d'éviter la pollution des optiques du système de guidage par le jet. Le propergol retenu est typiquement une composition Butalite®, constituée principalement de perchlorate d'ammonium et de polybutadiène. La combustion de ce type de propergol se fait à une vitesse d'environ 20 mm/s à 20 MPa avec un exposant de pression (loi de Vieille) d'environ 0,5. Tout autre type de composition à haut rendement propulsif, générant peu de particules, pourrait aussi être retenue.

Dans l'exemple présente, les chargements de propergol **9a** et **9b** sont de même composition.

Compte tenu de cette de loi de combustion, les chargements de l'exemple ont été déterminés de façon à procurer le débit de gaz souhaité, c'est-à-dire générer la quantité de gaz combustion dans un temps défini, suffisamment court par rapport à la durée opérationnelle du système et aux sollicitations de poussée.

Dans le cas de l'exemple présenté, les chargements pyrotechniques **9a** et **9b** sont de géométrie cylindrique à canal central. Les orifices **10a** et **10b** des chambres de combustion sont dimensionnés pour que les chargements brûlent à une pression quasiment identique à celle du réservoir **2**, l'objectif étant de transférer les gaz produits dans la chambre de combustion à vitesse modérée de manière à ne pas développer de turbulence propice aux transferts thermiques des gaz vers la structure.

Les chargements pyrotechniques de pressurisation initiale **9a** ont une masse de quelques centaines de grammes chacun et sont de géométrie cylindrique à canal central. La surface extérieure au canal est inhibée.

Les chargements pyrotechniques de maintien **9b** ont chacun une masse de quelques dizaines de grammes et sont de géométrie cylindrique à canal central. La surface extérieure au canal est inhibée.

On présente une simulation par calcul d'un scénario opérationnel de fonctionnement du dispositif **1** (voir les figures 3 et 4).

La première séquence correspond à la phase initiale de pressurisation et les premières activations de tuyères **4**. La combustion simultanée des chargements de pressurisation **9a** disposés à l'intérieur du réservoir **2** fait monter la pression (courbe en trait plein (-) de la figure 3) à une valeur de pression $P_{max}$ en une durée $t_1$. La masse de propergol consommée (courbe en pointillés (- - -) de la figure 3) croît linéairement, indépendamment de la pression dans le réservoir, pour atteindre la masse totale des chargements pyrotechniques de pressurisation initiale **9a.** Passé ce délai $t_1$, le dispositif devient opérationnel et peut délivrer des impulsions à la demande. C'est ce qui se passe entre $t_2$ et $t_4$ avec une d'impulsions dont l'intensité est de quelques centaines de Newtons. Les courbes délimitant les aires hachurées représentent l'enveloppe des séries d'impulsion, Au temps $t_3$, la pression dans le réservoir **2** atteint la valeur de seuil $(\alpha/100) \times P_{max}$, ce qui déclenche l'initiation du premier chargement de maintien **9b** disposé en périphérie. Comme à cet instant, en raison du scénario opérationnel simulé, le système continue de délivrer des impulsions, la combustion de ce bloc ne permet pas de remonter jusqu'à la valeur $P_{max}$. Au temps $t_4$, la pression atteint de nouveau la limite basse $(\alpha/100) \times P_{max}$. Cet instant coïncide avec une décision du système de pilotage de cesser la délivrance d'impulsion. La combustion d'un 2ème chargement pyrotechnique de maintien **9b** permet d'atteindre de nouveau la pression maximale $P_{max}$ au temps $t_5$.

On peut détailler ce fonctionnement du dispositif sur une durée plus courte de quelques dizaines de millisecondes (figure 4) après sa mise en pressurisation opérationnelle. Durant cette période, le système délivre 5 impulsions de quelques centaines de Newtons pendant quelques millisecondes (courbe en trait plein (-) de la figure 4). Cela se traduit par une très légère baisse de la pression (courbe (- - - -) de la figure 4). Chaque impulsion consomme quelques dixièmes de gramme de gaz qui sont éjectés. L'évolution de la masse de propergol consommée est également indiquée sur la figure 4 (courbe en pointillés ( - - -) de la figure 4).

## Revendications

1. Procédé de propulsion pyrotechnique avec modulation de poussée, **caractérisé en ce qu'**il comprend le maintien sous pression, dans le temps, d'au moins un réservoir (2) avec les gaz de combustion de chargements pyrotechniques solides, séparés (9a, 9b) ; au moins certains desdits chargements (9a, 9b) étant allumés, de façon différée, indépendamment les uns des autres, à la demande ; et la délivrance à volonté, en continu ou par créneaux, à partir dudit au moins un réservoir (2), de gaz sous pression ; ladite délivrance étant mise en oeuvre avec contrôle de la pression au sein dudit réservoir (2).

2. Procédé selon la revendication 1, **caractérisé en ce qu'**il comprend :

   - la pressurisation d'au moins un réservoir (2) avec les gaz de combustion d'au moins un chargement pyrotechnique solide "dit(s) chargement(s) initial(initiaux) (9a) ;
   - la délivrance, à volonté, en continu ou par créneaux, à partir dudit au moins un réservoir (2), desdits gaz sous pression ; ladite délivrance s'effectuant avec contrôle de la pression au sein dudit au moins un réservoir (2) ; et
   - au moins une fois, la mise en oeuvre des deux nouvelles étapes ci-après de :

      + re-pressurisation dudit au moins un réservoir (2) avec les gaz de combustion d'au moins un autre chargement pyrotechnique solide dit(s) chargement(s) de maintien (9b) ; et

+ délivrance, à volonté, en continu ou par créneaux, à partir dudit au moins un réservoir (2), desdits gaz ; ladite délivrance s'effectuant avec contrôle de la pression au sein dudit au moins un réservoir (2) ;

ladite re-pressurisation étant déclenchée lorsque ladite pression, au sein dudit au moins un réservoir (2), atteint un seuil prédéterminé, fixe ou variable.

**3.** Procédé selon la revendication 1 ou 2, **caractérisé en ce que** les gaz sous pression sont filtrés avant leur délivrance.

**4.** Procédé selon l'une quelconque des revendications 1 à 3, **caractérisé en ce que** lesdits chargements pyrotechniques (9a, 9b) sont constitués, indépendamment, d'un unique élément de propergol ou de plusieurs éléments de propergol, type blocs monolithiques ou pastilles, disposés en vrac ou arrangés.

**5.** Procédé selon l'une quelconque des revendications 1 à 4, **caractérisé en ce qu'**il est mis en oeuvre pour corriger la trajectoire et/ou pour moduler la poussée principale d'un missile.

**6.** Dispositif de propulsion pyrotechnique (1) avec modulation de poussée, **caractérisé en ce qu'**il comprend :

- au moins une chambre de combustion (8a) convenant à la combustion en son sein d'un chargement pyrotechnique dit chargement initial (9a), équipée d'au moins un orifice (10a) pour débiter les gaz de combustion générés dans au moins un réservoir (2) ;
- au moins une autre chambre de combustion (8b) convenant à la combustion en son sein d'un autre chargement pyrotechnique dit chargement de maintien (9b), équipée d'au moins un orifice (10b) pour débiter les gaz de combustion générés dans ledit au moins un réservoir (2) ;
- ledit au moins un réservoir (2) convenant au stockage sous pression desdits gaz de combustion, équipé de moyens de délivrance de gaz (4), actionnables à volonté ;
- des moyens d'allumage (15a, 15b), initiables à volonté par des moyens de commande (14), pour l'allumage indépendant du(des) chargement(s) initial(initiaux) (9a) puis, ensuite, du(des) chargement(s) de maintien (9b) ; et
- des moyens de contrôle de la pression (13) dans ledit au moins un réservoir (2), reliés auxdits moyens de commande (14) desdits moyens d'allumage (15a, 15b) indépendants des chargements pyrotechniques (9a, 9b).

**7.** Dispositif (1) selon la revendication 6, **caractérisé en ce que** ladite au moins une chambre de combustion (8a) convenant à la combustion, en son sein, d'un chargement pyrotechnique initial (9a) est agencée dans ledit au moins un réservoir (2).

**8.** Dispositif (1) selon la revendication 6 ou 7, **caractérisé en ce que** ladite au moins une chambre de combustion (8b) convenant à la combustion, en son sein, d'un chargement pyrotechnique de maintien (9b) est agencée à l'extérieur dudit au moins un réservoir (2).

**9.** Dispositif (1) selon l'une quelconque des revendications 6 à 8, **caractérisé en ce que** ledit au moins un réservoir (2) est une structure déployable ou rigide.

**10.** Dispositif (1) selon l'une quelconque des revendications 6 à 9, **caractérisé en ce que** la(les) paroi(s) (3a, 3b) dudit au moins un réservoir (2) est(sont) tapissée(s), sur (sa)leur face intérieure ou(et) extérieure, d'un isolant thermique (3').

**11.** Dispositif (1) selon l'une quelconque des revendications 6 à 10, **caractérisé en ce que** ledit au moins un orifice (10b) de ladite au moins une chambre de combustion (8b) convenant à la combustion, en son sein, d'un chargement pyrotechnique de maintien (9b), est operculé (11).

**12.** Dispositif (1) selon l'une quelconque des revendications 6 à 11, **caractérisé en ce qu'**un système de filtration (12) de particules solides est implanté dans ledit au moins un réservoir (2) en amont desdits moyens de délivrance de gaz (4).

**13.** Dispositif (1) selon l'une quelconque des revendications 6 à 12, **caractérisé en ce que** lesdits moyens de délivrance de gaz (4), actionnables à volonté, comprennent au moins une tuyère.

**14.** Dispositif (1) selon l'une quelconque des revendications 6 à 13, **caractérisé en ce qu'**il comprend un réservoir (2) de structure rigide, dont les parois (3a, 3b) présentent des alvéoles (7a, 7b):

- au moins une desdites alvéoles (7a), convenant à l'agencement interne d'une chambre de combustion (8a), pour la combustion d'un chargement pyrotechnique initial (9a),
- au moins une desdites alvéoles (7b), convenant à l'agencement externe d'une chambre de combustion (8b), pour la combustion d'un chargement pyrotechnique de maintien (9b).

**15.** Dispositif (1) selon la revendication 14, **caractérisé en ce qu'**il comprend un réservoir (2) délimité par une paroi cylindrique (3b) et deux parois d'extrémité (3a), avantageusement bombées, prolongeant ladite paroi cylindrique (3b); lesdites parois d'extrémité (3a) présentant des alvéoles (7a), disposées par paire, en vis-à-vis, convenant à l'agencement interne de chambres à combustion (8a), et ladite paroi latérale (3b) présentant n alvéoles (7b), convenant à l'agencement externe de n chambres de combustion (8b) ; lesdites n alvéoles (7b) étant réparties en m couronnes de n/m alvéoles.

**Claims**

**1.** Pyrotechnic propulsion method with thrust modulation, **characterized in that** it comprises the maintaining sander pressure, over time, of at least one tank (2) with separate, solid pyrotechnic charge combustion gases (9a, 9b); at least some of said charges (9a, 9b) being ignited, in a deferred manner, independently of one another, on demand; and the delivery, at wall, contiguously or by time slots from said at least one tank (2), of gas under pressure; said delivery being implemented with control of the pressure within said tank (2).

**2.** The method according to claim 1, **characterized in that** it comprises:

- the pressurization of at least one tank (2) with the combustion gases of at least one solid pyrotechnic charge called initial charge(s) (9a);
- the delivery, at will, continuously or by time slots from said at least one tank (2), of said gases under pressure; said delivery being effected with control of the pressure within said at least one tank (2); and
- at least once, the implementation of the two new steps below of:

  + re-pressurization of said at least one tank (2) with the combustion gases of at least one other solid pyrotechnic charge called maintenance charge(s) (9b); and
  + delivery, at will, continuously or by time slots from said at least one tank (2), of said gases; said delivery being effected with control of the pressure within said at least one tank (2);

said re-pressurization being triggered when said pressure, within said at least one tank (2), reaches a fixed or variable predetermined threshold.

**3.** The method according to claim 1 or 2, **characterized in that** the gases under pressure are filtered before their delivery.

**4.** The method according to any one of claims 1 to 3, **characterized in that** said pyrotechnic charges (9a, 9b) comprise, independently, a single propellant element or several propellant elements, of monolithic block or pellet type, arranged loosely or in an organized fashion.

**5.** The method according to any one of claims 1 to 4, **characterized in that** it is implemented to correct the trajectory and/or to modulate the main thrust of a missive.

**6.** Pyrotechnic propulsion device (1) with thrust modulation, **characterized in that** it comprises:

- at least one combustion chamber (8a) suitable for the combustion within it of a pyrotechnic charge called initial charge (9a), equipped with at least one orifice (10a) for discharging the combustion gases generated into at least one tank (2);
- at least one other combustion chamber (8b) suitable for the combustion within it of another pyrotechnic charge called maintenance charge (9b), equipped with at least one orifice (10b) for discharging the combustion gases generated into said at least one tank (2);
- said at least one tank (2) being suitable for the storage under pressure of said combustion gases and equipped with gas delivery means (4), that can be operated at will;
- ignition means (15a, 15b), that can be initiated at will by control means (14), for the independent ignition of the initial charge(s) (9a) and then, next, of the maintenance charge(s) (9b); and

- means (13) of controlling the pressure in said at least one tank (2), connected to said control means (14) of said means (15a, 15b) of independently igniting the pyrotechnic charges (9a, 9b).

7. The device (1) according to claim 6, **characterized in that** said at least one combustion chamber (8a) suitable for the combustion, within it, of an initial pyrotechnic charge (9a) is arranged in said at least one tank (2).

8. The device (1) according to claim 6 or 7, **characterized in that** said at least one combustion chamber (8b) suitable for the combustion, within it, of a maintenance pyrotechnic charge (9b) is arranged outside said at least one tank (2).

9. The device (1) according to any one of claims 6 to 8, **characterized in that** said at least one tank (2) is an expandable or rigid structure.

10. The device (1) according to any one of claims 6 to 9, **characterized in that** the wall(s) (3a, 3b) of said at least one tank (2) is (are) upholstered on its (their) internal face or (and) external face, with a thermal insulation material (3').

11. The device (1) according to any one of claims 6 to 10, **characterized in that** said at least one orifice (10b) of said at least one combustion, chamber (8b) suitable for the combustion, within it, of a maintenance pyrotechnic charge (9b), is capped (11).

12. The device (1) according to any one of claims 6 to 11, **characterized in that** a solid particle filtration system (12) is fitted in said at least one tank (2) upstream of said gas delivery means (4).

13. The device (1) according to any one of claims 6 to 12, **characterized in that** said gas delivery means (4), which can be operated at will, comprise at least one nozzle.

14. The device (1) according to any one of claims 6 to 13, **characterized in that** it comprises a tank (2) of rigid structure, the walls (3a, 3b) of which have cells (7a, 7b):

    - at least one of said cells (7a), suitable for the internal arrangement of a combustion chamber (8a), for the combustion of an initial pyrotechnic charge (9a),

    - at least one of said cells (7b), suitable for the external arrangement of a combustion chamber (8b), for the combustion of a maintenance pyrotechnic charge (9b).

15. The device (1) according to claim 14, **characterized in that** it comprises a tank (2) delimited by a cylindrical wall (3b) and two end walls (3a), advantageously dished, in extension of said cylindrical wall (3b) ; said end walls (3a) having cells (7a), arranged in pairs, facing one another, suitable for the internal arrangement of combustion chambers (8a), and said lateral wall (3b) having n cells (7b), suitable for the external arrange of n combustion chambers (8b); said n cells (7b) being divided up into m rings of n/m cells.

**Patentansprüche**

1. Pyrotechnisches Antriebsverfahren mit Schubmodulation, **dadurch gekennzeichnet, daß** es das zeitliche Unterdruckhalten wenigstens eines Behälters (2) mit den Verbrennungsgasen von getrennten festen pyrotechnischen Ladungen (9a, 9b), wobei wenigstens einige der Ladungen (9a, 9b) unabhängig voneinander auf Anfrage verzögert gezündet werden, sowie die Abgabe von Druckgas nach Belieben, kontinuierlich oder stoßweise, aus dem wenigstens einen Behälter (2) umfaßt, wobei die Abgabe mit Kontrolle des Druckes innerhalb des Behälters (2) vollzogen wird.

2. Verfahren nach Anspruch 1, **dadurch gekennzeichnet, daß** es folgendes umfaßt:

    - die Druckbeaufschlagung wenigstens eines Behälters (2) mit den Verbrennungsgasen wenigstens einer festen pyrotechnischen Ladung, sogenannten Initialladung(en) (9a),

    - die Abgabe der Druckgase nach Belieben, kontinuierlich oder stoßweise, aus dem wenigstens einen Behälter (2), wobei die Abgabe mit Kontrolle des Druckes innerhalb des wenigstens einen Behälters (2) erfolgt, und

    - wenigstens einmal die Durchführung der beiden nachfolgenden neuen Schritte:

- erneute Druckbeaufschlagung des wenigstens einen Behälters (2) mit den Verbrennungsgasen wenigstens einer weiteren festen pyrotechnischen Ladung, sogenannten Halteladung(en) (9b), und
- Abgabe der Gase nach Belieben, kontinuierlich oder stoßweise, aus dem wenigstens einen Behälter (2), wobei die Abgabe mit Kontrolle des Druckes innerhalb des wenigstens einen Behälters (2) erfolgt,

wobei die erneute Druckbeaufschlagung ausgelöst wird, wenn der Druck innerhalb des wenigstens einen Behälters (2) eine vorbestimmte feste oder variable Schwelle erreicht,

3. Verfahren nach Anspruch 1 oder 2, **dadurch gekennzeichnet, daß** die Druckgase vor ihrer Abgabe gefiltert werden.

4. Verfahren nach einem der Ansprüche 1 bis 3, **dadurch gekennzeichnet, daß** die pyrotechnischen Ladungen (9a, 9b) unabhängig von einem einzigen Treibstoffelement oder von mehreren Treibstoffelementen, von der Art monolithischer Blöcke oder Tabletten, die lose angeordnet oder geordnet sind, gebildet sind.

5. Verfahren nach einem der Ansprüche 1 bis 4, **dadurch gekennzeichnet, daß** es durchgeführt wird, um die Flugbahn zu korrigieren und/oder um den Hauptschub eines Flugkörpers zu modulieren.

6. Pyrotechnische Antriebsvorrichtung (1) mit Schubmodulation, **dadurch gekennzeichnet, daß** sie folgendes umfaßt:

- wenigstens eine Brennkammer (8a), die geeignet ist, in ihr eine pyrotechnische Ladung, sogenannte Initialladung (9a) abzubrennen und die mit wenigstens einer Öffnung (10a) ausgestattet ist, um die erzeugten Verbrennungsgase in wenigstens einen Behälter (2) abzugeben,
- wenigstens eine weitere Brennkammer (8b), die geeignet ist, in ihr eine weitere pyrotechnische Ladung, sogenannte Halteladung (9b) abzubrennen und die mit wenigstens einer Öffnung (10b) ausgestattet ist, um die erzeugten Verbrennungsgase in den wenigstens einen Behälter (2) abzugeben,
- den wenigstens einen Behälter (2), der geeignet ist, die Verbrennungsgase unter Druck zu lagern und der mit nach Belieben betätigbaren Gasabgabemitteln (4) ausgestattet ist,
- durch Steuermittel (14) nach Belieben auslösbare Zündungsmittel (15a, 15b) zum unabhängigen Zünden der Initialladung(en) (9a), anschließend der Halteladung(en) (9b), und
- Mittel zur Kontrolle des Druckes (13) in dem wenigstens einen Behälter (2), die mit den Steuermitteln (14) der Mittel (15a, 15b) zum unabhängigen Zünden der pyrotechnischen Ladungen (9a, 9b) verbunden sind.

7. Vorrichtung (1) nach Anspruch 6, **dadurch gekennzeichnet, daß** die wenigstens eine Brennkammer (8a), die geeignet ist, in ihr eine pyrotechnische Initialladung (9a) abzubrennen, in dem wenigstens einen Behälter (2) angeordnet ist.

8. Vorrichtung (1) nach Anspruch 6 oder 7, **dadurch gekennzeichnet, daß** die wenigstens eine Brennkammer (8b), die geeignet ist, in ihr eine pyrotechnische Halteladung (9b) abzubrennen, außerhalb des wenigstens einen Behälters (2) angeordnet ist.

9. Vorrichtung (1) nach einem der Ansprüche 6 bis 8, **dadurch gekennzeichnet, daß** der wenigstens eine Behälter (2) eine entfaltbare oder starre Struktur ist.

10. Vorrichtung (1) nach einem der Ansprüche 6 bis 9, **dadurch gekennzeichnet, daß** die Wand (Wände) (3a, 3b) des wenigstens einen Behälters (2) an ihrer Innen- oder (und) Außenseite mit einem Wärmeisoliermaterial (3') ausgekleidet sind.

11. Vorrichtung (1) nach einem der Ansprüche 6 bis 10, **dadurch gekennzeichnet, daß** die wenigstens eine Öffnung (10b) der wenigstens einen Brennkammer (8b), welche geeignet ist, in ihr eine pyrotechnische Halteladung (9b) abzubrennen, mit einem Deckel (11) versehen ist.

12. Vorrichtung (1) nach einem der Ansprüche 6 bis 11, **dadurch gekennzeichnet, daß** in dem wenigstens einen Behälter (2), den Gasabgabemitteln (4) vorgeschaltet, ein System zum Filtern (12) von Feststoffteilchen angeordnet ist.

13. Vorrichtung (1) nach einem der Ansprüche 6 bis 12, **dadurch gekennzeichnet, daß** die nach Belieben betätigbaren Gasabgabemittel (4) wenigstens eine Düse umfassen.

**14.** Vorrichtung (1) nach einem der Ansprüche 6 bis 13, **dadurch gekennzeichnet, daß** sie einen Behälter (2) mit starrer Struktur umfaßt, dessen Wände (3a, 3b) Hohlräume (7a, 7b) aufweisen:

- wobei wenigstens einer der Hohlräume (7a) für das innenseitige Anordnen einer Brennkammer (8a) zum Abbrennen einer pyrotechnischen Initialladung (9a) ausgelegt ist,
- wobei wenigstens einer der Hohlräume (7b) für das außenseitige Anordnen einer Brennkammer (8b) zum Abbrennen einer pyrotechnischen Halteladung (9b) ausgelegt ist.

**15.** Vorrichtung (1) nach Anspruch 14, **dadurch gekennzeichnet, daß** sie einen Behälter (2) umfaßt, der durch eine zylindrische Wandung (3b) und durch zwei endseitige, vorteilhafterweise gewölbte Wände (3a), welche die zylindrische Wandung (3b) fortsetzen, begrenzt ist, wobei die endseitigen Wände (3a) paarweise angeordnete, einander gegenüberliegende Hohlräume (7a) aufweist, die für das innenseitige Anordnen von Brennkammern (8a) ausgelegt sind, und wobei die Seitenwandung (3b) n Hohlräume (7b) aufweist, die für das außenseitige Anordnen von n Brennkammern (8b) ausgelegt sind, wobei die n Hohlräume (7b) auf m Kränze von n/m Hohlräumen verteilt sind.

**FIG.1**

**FIG.2A**

**FIG.2B**

**FIG.2C**

Pression

Masse

$P_{max}$

$(\alpha/100) \times P_{max}$

Poussée

$t_1$ $t_2$     $t_3$     $t_4$ $t_5$

Temps (s)

**FIG.3**

Poussée

Masse

Pression

Temps (s)

**FIG.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060201134 A

**Littérature non-brevet citée dans la description**

- **DAUCH et al.** Snpe Matériaux Energetiques technologies for missile defence propulsion systems. *3rd AAAF International Conference on Missile Defence, Challenge in Europe,* 07 Juin 2006